# EUROPÄISCHE PATENTSCHRIFT

(11) **EP 1 404 091 B1**
(45) Veröffentlichungstag und Bekanntmachung des Hinweises auf die Patenterteilung: **10.02.2010**
(21) Anmeldenummer: 03017487.4
(22) Anmeldetag: 01.08.2003
(51) Int. Cl.: H04M 3/42

(54) **Verfahren und Vorrichtung zur Steuerung und/oder Überwachung einer MULAP-Leitung**
Method and means for controlling and/or monitoring of a MULAP line
Méthode et moyens pour le contrôle et/ou la surveillance d'une ligne MULAP

(30) Priorität: 05.09.2002 DE 10241180
(43) Veröffentlichungstag der Anmeldung: 31.03.2004
(73) Patentinhaber: SIEMENS AKTIENGESELLSCHAFT, 80333 München (DE)
(72) Erfinder: Crevits, Luc, 8700 Tielt (BE); De Clercq, Freddy, 8020 Oostkamp (BE)
(74) Vertreter: Fritzsche, Thomas

(56) Entgegenhaltungen:
- EP-A- 1 172 992
- EP-A2- 0 535 602
- SIEMENS: "HiPath 3000"[Online] 2001, Seiten 1-12, XP002427311 Gefunden im Internet: URL:http://www.siemens.hu/htm/ajanlataink/ icn/download/a31002-h1000-a210-2-29.pdf> [gefunden am 2007-03-29]
- "HiPath AllServe 150 V1.0" INTERNET CITATION, [Online] Februar 2001 (2001-02), XP002257651 Gefunden im Internet: URL:http://www.siemens.com publisher : Siemens> [gefunden am 2003-10-13]

## Beschreibung

Die Erfindung betrifft ein Verfahren und eine Vorrichtung zur die Steuerung und/oder Überwachung einer MULAP-Leitung gemäß den Merkmalen der Ansprüche 1 und 4.

Es sind Sprach-Kommunikationssysteme bekannt, bei denen in Regel an jedem Teilnehmeranschluss genau ein Endgerät (Telefon) angeschlossen ist. Wenn jedoch von mehreren Endgeräten aus auf einen Teilnehmeranschluss zugegriffen werden kann, bezeichnet man einen solchen Anschluss bzw. eine solche Leitung als MULAP (MULAP = engl.: Multiple Line Appearance). Solche Schaltungen werden häufig für Arbeitsgruppen verwendet, wo jeder Mitarbeiter Anrufe, die auf einer bestimmten Leitung ankommen, entgegennehmen kann. Dabei sind auf jedem Endgerät meist mehrere solcher MULAP-Leitungen aufgeschaltet, die von internen und externen Teilnehmern unter den jeweiligen Rufnummern (die sog. MULAP-Nummern) erreichbar sind. So können beispielsweise in einer Vertriebsabteilung eines Unternehmens separate MULAP-Leitungen für Bestellanfragen, technische Informationen, Lieferauskünfte und das Rechnungswesen eingerichtet sein. Jedes Endgerät, an dem diese MULAP-Leitungen verfügbar sind, hat dabei für jede Leitung eine Signalleuchte und eine Zugriffstaste (MULAP-Taste). Sobald ein Kunde auf einer der MULAP-Leitungen anruft, wird dieser Ruf an allen diesen Apparaten akustisch signalisiert, die der Leitung zugeordnete Leuchte blinkt und jeder Teilnehmer der Arbeitsgruppe kann durch Drücken der entsprechenden Taste den Anruf entgegennehmen.

Umgekehrt kann der Mitarbeiter vor dem Wählen einer Rufnummer mit der MULAP-Taste gezielt eine bestimmte Leitung auswählen. Dieser Leitung werden dann beispielsweise die Gesprächsgebühren zugeordnet, die MULAP-Nummer dieser Leitung wird zum Angerufenen übermittelt und die Leitung wird während der Dauer des Gesprächs anderen Anrufern als "besetzt" signalisiert.

Ein entsprechendes Sprach-Kommunikationssystem ist aus der Druckschrift Siemens: HiPath 3000" [Online] 2001, Seiten 1-12, URL:http://www.siemens.hu/htm/ajanlataink/icn/download/ a31002-h1000-2210-2-29.pdf>, bekannt. Das dort beschriebene Kommunikationssystem Siemens HiPath 3000 kann flexibel mit einer Anzahl von MULAP-Leitungstasten konfiguriert werden. Neben diesem Kommunikationssystem, welches sowohl leitungsvermittelte als auch paketvermittelte Sprachkommunikation unterstützt, sind leitungsvermittelte Kommunikationsanlagen mit der MULAP-Funktionalität aus der Druckschrift EP-A2-0535602, Crevits et al., "Programmgesteuerte Kommunikationsanlage bei der eine Verbindungsanforderung gleichzeitig an mehrere Kommunikationsendgeräte signalisiert wird" und aus der Druckschrift EP-A-1172992, Crevits et al., "Gruppentask-Konzept" bekannt.

Zur Steuerung und Überwachung von Teilnehmeranschlüssen in privaten Kommunikationsanlagen werden heutzutage vermehrt spezielle, auf PCs installierte Anwendungsprogramme verwendet. Solche Applikationen, man spricht auch von CTI-Applikationen (CTI = engl.: Computer Telephony Integration), melden beispielsweise eingehende Rufe auf dem PC-Bildschirm und zeigen dabei - je nach Verfügbarkeit - die Rufnummer des Anrufers und dessen Namen an, der anhand dieser Rufnummer aus einem Telefonverzeichnis ermittelt wird. Weiter können CTI-Anwendungen auch zum Aufbau von Verbindungen benutzt werden, indem per "Mouse-Klick" aus Adressbüchern und Datenbanken heraus "gewählt" werden kann. Zu diesen Zwecken ist der PC oder ein im Computernetz vorhandener zentraler Server mit dem Telefon-Endgerät oder der Kommunikationsanlage verbunden, damit Wahlbefehle, Zustands- und Gesprächsinformationen ausgetauscht werden können. Diese Verbindungen nutzen seitens der Kommunikationsanlage in der Regel genormte Schnittstellen, beispielsweise die CSTA-Schnittstelle (CSTA = engl.: Computers Supported Telephony Application). Solche Schnittstellen arbeiten mit einem genormten Befehlssatz, der je nach Version (bei CSTA spricht man auch von "Phase") verschiedene Befehle unterschiedlicher Leistungsfähigkeit unterstützt.

Aus der Produktschrift "HiPath Allserve 150 V1.0" URL:http://www.siemens.com ist ein Kommunikationsserver bekannt, der zur Realisierung von CTI-Applikationen im Sinne des Vorgenannten eingerichtet ist.

Bei den bekannten Kommunikationsanlagen und CTI-Anwendungen hat sich als nachteilig erwiesen, dass MULAP-Leitungen mit CTI-Anwendungen nur umständlich oder nicht vollständig gesteuert und überwacht werden können. Ein Grund dafür ist, dass CTI-Anwendungen und die genormten Schnittstellen für die Steuerung und Überwachung einzelner Endgeräte und nicht für MULAP-Leitungen oder Gruppen vorgesehen sind. Zur Überwachung von MULAP-Leitungen müssen von einer CTI-Anwendung daher mehrere Rufnummern gleichzeitig überwacht werden, unter anderem eine eigens eingerichtete "virtuelle" Rufnummer (d.h. ein scheinbarer Teilnehmeranschluss, an dem kein Endgerät angeschlossen ist) zur Ermittlung des Rufzustandes sowie eine intern vergebene Rufnummer für den Master-Anschluss jeder MULAP-Leitung, die dem Anwender des Systems nicht bekannt ist. Letztere wird zum Aufbau von Verbindungen aus der CTI-Anwendung heraus benötigt. Gebräuchliche CTI-Anwendungen sind jedoch nicht zur Steuerung und Überwachung von Teilnehmeranschlüssen und Endgeräten mit mehreren zugeordneten Rufnummern eingerichtet.

Der Erfindung liegt daher die Aufgabe zugrunde, die Kombination von MULAP-Leitungen und CTI-Anwendungen zu vereinfachen.

Die Lösung dieser Aufgabe ist für das Verfahren durch die im Patentanspruch 1 und für die Anordnung durch die im Patentanspruch 4 angegebenen Merkmale gegeben.

Die Lösung sieht für das Verfahren vor, dass die Steuerung und/oder Überwachung der MULAP-Leitungen anhand mehrerer Verfahrensschritte erfolgt. In einem ersten Schritt versendet die Anwendung einen Auftrag für eine MULAP-Rufnummer an die Kommunikationsanlage. In einem weiteren Schritt setzt die Kommunikationsanlage die MULAP-Rufnummer in die Endgeräte-Rufnummer des dieser MULAP-Leitung zugeordneten Master-Endgeräts um und führt den Auftrag für diese Endgeräte-Rufnummer aus, wobei alle die MULAP-Leitung betreffenden Meldungen als die des Master-Endgerätes von der Kommunikationsanlage zur Anwendung als Meldungen dieser MULAP-Rufnummer gesendet werden. Dadurch kann eine MULAP-Leitung durch die CTI-Applikation wie ein normaler Teilnehmeranschluß gesteuert und überwacht werden.

Durch die Merkmale der Unteransprüche ist die Erfindung in vorteilhafter Weise weiter ausgestaltet.

Eine CTI-Anwendung kann Verbindungen für jede der MULAP-Leitungen einfach aufbauen, wenn jeder der MULAP-Leitungen jeweils ein anderes Endgerät als Master-Endgerät zugeordnet ist.

Wenn beim Zugriff auf eine MULAP-Leitung an einem anderen als dem Master-Endgerät dieser MULAP-Leitung eine Meldung erzeugt wird, die das Master-Endgerät dieser MULAP-Leitung betrifft, so kann auch dann eine Zustandsänderung der MULAP-Leitung in der CTI-Anwendung signalisiert werden, wenn die Rufsignalisierung am Master-Endgerät abgeschaltet ist.

Die Lösung sieht für die Anordnung vor, dass diese zur Steuerung und/oder Überwachung zumindest einer MULAP-Leitung einer Kommunikationsanlage durch eine Anwendung, wobei jeder MULAP-Leitung eine MULAP-Rufnummer zugeordnet ist und mehrere Endgeräte auf die MULAP-Leitungen zugreifen können, wobei jeder der MULAP-Leitungen jeweils ein Endgerät als Master-Endgerät zugeordnet ist, wobei die Anwendung einen Auftrag für eine MULAP-Rufnummer an die Kommunikationsanlage versendet,
wobei eine Umsetzeinheit vorgesehen ist, welche die MULAP-Rufnummer in die Endgeräte-Rufnummer des dieser MULAP-Leitung zugeordneten Master-Endgeräts umsetzt, und wobei die Kommunikationsanlage den Auftrag für diese Endgeräte-Rufnummer ausführt, wobei alle die MULAP-Leitung betreffenden Meldungen als die des Master-Endgeräts von der Kommunikationsanlage zur Anwendung als Meldungen dieser MULAP-Rufnummer gesendet werden.

Ein Ausführungsbeispiel der Erfindung zur Steuerung und/oder Überwachung einer MULAP-Leitung wird nachfolgend anhand der Zeichnung beschrieben. Dabei zeigen:
- Fig. 1: eine leitungsvermittelte Kommunikationsanlage mit drei Endgeräten und einem PC,
- Fig. 2: den Ablauf eines CTI-gesteuerten Rufaufbaus von einem MULAP-Master-Endgerät zu einem Nicht-MULAP-Endgerät,
- Fig. 3: den Ablauf für den Start einer Überwachung einer MULAP-Leitung,
- Fig. 4: das Versenden einer Statusmeldung, wenn das MULAP-Endgerät **101 den Hörer abhebt, und
- Fig. 5: das Versenden einer Statusmeldung, wenn eine MULAP-Leitung an einem Nicht-MULAP-Master-Endgerät belegt wird.

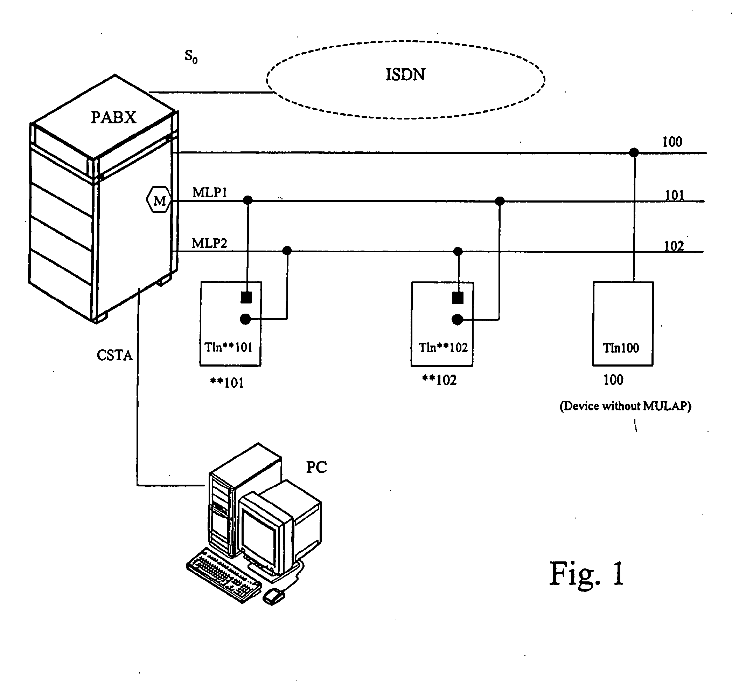

In Fig. 1 ist eine leitungsvermittelnde private Kommunikationsanlage PABX gezeigt, die über eine digitale Amtsleitung S₀ mit dem öffentlichen Kommunikationsnetz ISDN verbunden ist. Die Kommunikationsanlage PABX ist mit einer CTI-Schnittstelle CSTA ausgerüstet, über die ein Computer PC angeschlossen ist. Auf dem Computer PC ist eine hier nicht dargestellte CTI-Anwendung installiert, die der Steuerung und Überwachung von als Telefon ausgeführten Endgeräten TLN**101, TLN**102, TLN100 dient. In der Kommunikationsanlage PABX sind zwei Teilnehmeranschlüsse MLP1, MLP2 als MULAP-Leitungen mit den MULAP-Rufnummern 101, 102 eingerichtet. Auch diese MULAP-Leitung ist über die Endgeräte TLN**101, TLN**102 jeweils mittels zweier Tasten mit zugeordneter Leuchte zugreifbar. In der internen Wahlzuordnungstabelle der Kommunikationsanlage PABX ist das Endgerät TLN**101 mit der internen Rufnummer **101 und das Endgerät TLN**102 mit der internen Rufnummer **102 hinterlegt. Diese beiden nur in der Vermittlungstechnik der Kommunikationsanlage benutzten Rufnummern **101, **102 bezeichnen kommunikationsanlagenintern den physikalischen Teilnehmeranschluss, an dem diese Endgeräte angeschlossen sind. Diese beiden Rufnummern **101, **102 sind den Anwendern, also den Anrufern und dem Benutzer der beiden Apparate, nicht bekannt. Das dritte Telephonie-Endgerät TLN100 besitzt keine MULAP-Tasten und ist über die interne Rufnummer 100 erreichbar, die auch von den Anrufern benutzt wird und deshalb bekannt ist. Die beiden MULAP-Endgeräte TLN**101, TLN**102 hingegen sind nur erreichbar, indem eine der beiden MULAP-Rufnummern 101, 102 gewählt wird. In diesem Fall läuten beide Apparate, und die der jeweiligen MULAP-Taste zugeordnete Leuchte zeigt an, welche der beiden MULAP-Rufnummern 101, 102 vom Anrufer gewählt wurde. Der Anruf wird dann an einem der beiden Endgeräte TLN**101, TLN**102 durch Drücken der Taste entgegengenommen.

Die auf den Computer PC installierte CTI-Anwendung dient der Steuerung und der Überwachung von Teilnehmern der Kommunikationsanlage PABX. So kann ein Benutzer der CTI-Anwendung eine Verbindung zwischen dem Endgerät TLN100 und einem Teilnehmer in einem öffentlichen Kommunikationsnetz ISDN herstellen, indem er in der CTI-Anwendung in einer Geräteliste das Endgerät TLN100 als zu steuerndes Endgerät auswählt und danach in einem Telefonverzeichnis die Rufnummer des gewünschten Teilnehmers im Kommunikationsnetz ISDN auswählt und eine "Wählen-Taste" drückt bzw. anklickt. Durch das Aktivieren der Funktion "Wählen" wird eine Befehlsfolge vom Computer PC über eine Verbindungsleitung zur Schnittstelle CSTA der Kommunikationsanlage PABX gesendet, die als Parameter die Rufnummer 100 des zu steuernden Endgerätes TLN100, die Zielrufnummer im Kommunikationsnetz ISDN und einen Steuercode für den Befehl "Wählen" enthält. Damit wird von der Kommunikationsanlage PABX die gewünschte Verbindung aufgebaut.

Die aus dem Computer PC installierte CTI-Anwendung kann auch zur Überwachung des Endgerätes TLN100 eingesetzt werden, indem analog zum oben beschriebenen Verfahren in der CTI-Anwendung aus einer Liste aller verfügbaren Endgeräte das Endgerät TLN100 zur Überwachung ausgewählt wird. Mit dem Starten des Überwachungsvorgangs M sendet die CTI-Anwendung an die Schnittstelle CSTA der Kommunikationsanlage PABX eine Befehlsfolge, die als Parameter die Rufnummer 100 des Endgerätes TLN100 und einen Steuercode für den Befehl "Überwachen" enthält. Innerhalb der Kommunikationsanlage PABX wird damit eine Überwachungsroutine gestartet, die überwacht, ob sich eine Zustandsänderung an dem Teilnehmeranschluss des Endgeräts TLN100 ereignet. Nach jeder Änderung sendet die Kommunikationsanlage PABX über die Schnittstelle CSTA eine Ereignismeldung zur CTI-Anwendung an den Computer PC. Diese Ereignismeldung enthält als Adressangabe die Rufnummer 100 des Endgerätes TLN100 und einen Steuercode für die erfolgte Zustandsänderung. Eine solche Zustandsänderung kann z. B. ein Ruf sein, der aus dem öffentlichen Kommunikationsnetz ISDN kommend in der Kommunikationsanlage PABX für den Teilnehmeranschluss des Teilnehmers TLN100 eingeht. Somit läutet beim eingehenden Ruf nicht nur das Endgerät TLN100, sondern es öffnet sich auch auf dem Bildschirm des Computers PC ein Meldungsfenster, in dem auf den anstehenden Ruf hingewiesen und in dem die übermittelte Rufnummer des Anrufers angezeigt wird. Selbstverständlich kann auch die Rufnummer des Anrufers zur späteren Verwendung gespeichert werden und weitere Komfortmerkmale in der CTI-Anwendung realisiert sein. Der Start des Überwachungsvorganges M für den Teilnehmeranschluss mit der Rufnummer 100 wird häufig als "Setzen eines Monitor-Punkts" bezeichnet.

Die internen Rufnummern **101, **102 der MULAP-Endgeräte TLN**101, TLN**102 sind dem Anwender des PCs nicht bekannt und können auch nicht als Parameter der CTI-Anwendung benutzt werden. Dabei ist das Endgerät TLN**101 mit der internen Rufnummer **101 der MULAP-Leitung MLP1 mit der MULAP-Nummer 101 als Master-Endgerät zugeordnet. Eine Verbindung, die von der MULAP-Leitung 101 zu einem externen oder internen Teilnehmer aufgebaut wird, wird kommunikationsanlagenintern als abgehender Ruf des Master-Endgerät TLN**101 verwaltet. Gleiches gilt für die MULAP-Leitung MLP2 mit dem Endgerät TLN**102.

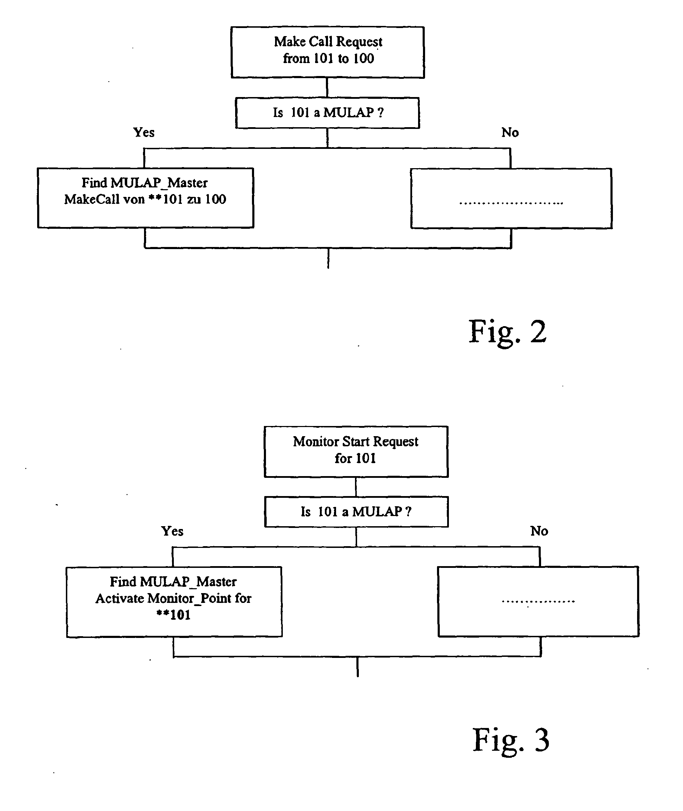

In Fig. 2 ist der Aufbau einer Verbindung zwischen den Endgeräten TLN**101 und damit der MULAP-Leitung MLP1 und einem externen Teilnehmer im Kommunikationsnetz ISDN beschrieben, wobei die Verbindung durch den Anwender der CTI-Anwendung des Computers PC initiiert wird. Der Benutzer der CTI-Anwendung wählt aus der Liste der zu steuerbaren Geräte das "Endgerät" mit der Rufnummer 101 aus, obwohl es sich in Wirklichkeit bei diesem nicht um ein Endgerät handelt, sondern die Rufnummer der MULAP-Leitung MLP1. Für die CTI-Anwendung stellt sich jedoch in der Kommunikation mit der Kommunikationsanlage PABX die Rufnummer 101 als Endgerät dar. Somit wird der Kommunikationsanlage PABX über die Schnittstelle CSTA eine Befehlsfolge übermittelt, die als zu steuerndes Endgerät - man sagt auch als Ziel-Hardware - das "Endgerät" 101 und als Verbindungsziel die Rufnummer des externen Teilnehmers und als Befehl "Wählen" enthält. In der Kommunikationsanlage PABX wird nun anhand der gespeicherten Konfigurationsdaten überprüft, ob es sich bei der Rufnummer 101 tatsächlich um ein Endgerät oder ob es sich bei 101 um eine MULAP-Leitung handelt. Im vorliegenden Fall ist 101 eine MULAP-Leitung, der ein Master-Endgerät zugeordnet ist. Die Kommunikationsanlage PABX erhält aus der Konfigurationsdatenbank die Information, dass der MULAP-Leitung MLP1 mit der MULAP-Rufnummer 101 das Endgerät TLN**101 mit der internen Rufnummer **101 zugeordnet ist. Der von der CTI-Anwendung übertragene Befehl wird nun so ausgeführt, als hätte das Datenfeld für die "Ziel-Hardware" die Rufnummer **101 enthalten. Die Kommunikationsanlage PABX aktiviert deshalb den Lautsprecher des Endgerätes TLN**101 und baut den Ruf zum externen Teilnehmer auf.

In Fig. 3 ist der Start der Überwachung der MULAP-Leitung 101 durch die CTI-Anwendung schematisch dargestellt. Die CTI-Anwendung sendet der Kommunikationsanlage PABX eine Befehlsfolge, die als zu überwachendes Endgerät die Rufnummer 101 enthält. Die Kommunikationsanlage überprüft mit Hilfe der gespeicherten Konfigurationsdaten die übermittelte Rufnummer 101 und stellt fest, dass es sich dabei um eine MULAP-Rufnummer handelt, deren Master-Endgerät die interne Rufnummer **101 zugeordnet ist, und startet einen Überwachungsvorgang M des Anschlusses, an dem das Master-Endgerät **101 angeschaltet ist.

Als Beispiel für ein Ereignis, welches die so überwachte MULAP-Leitung 101 betrifft und welches an die CTI-Applikation gemeldet wird, wird im Folgenden die Belegung der MULAP-Leitung 101 durch einen internen Teilnehmer der Kommunikationsanlage PABX beschrieben. Die Belegung der Leitung erfolgt, indem an einem der Endgeräte Tln**101, Tln**102 die dieser MULAP-Leitung 101 zugeordnete Taste gedrückt wird.

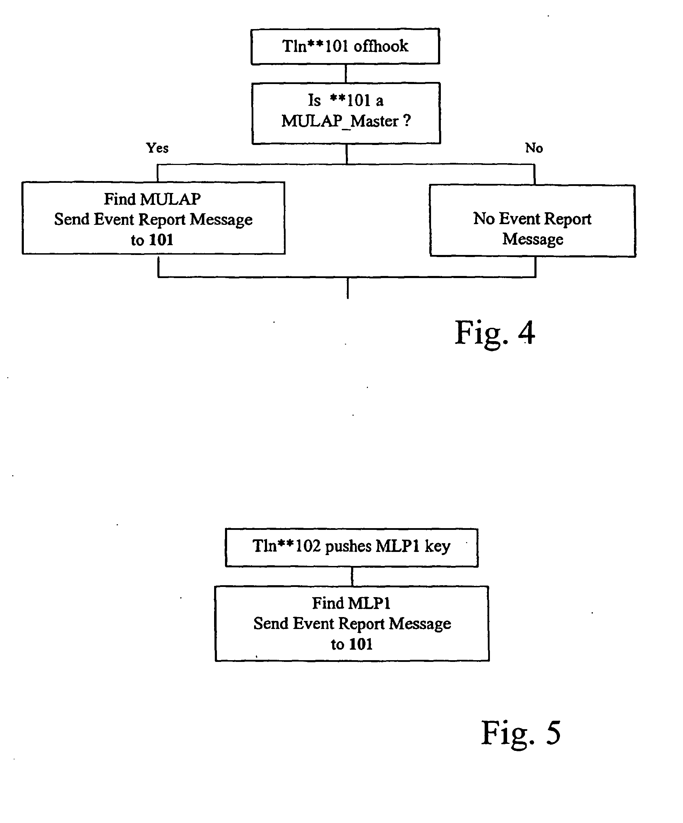

Fig. 4 zeigt hierbei den Verlauf einer abgehenden Wahl vom Endgerät Tln**101 aus. Der Teilnehmer hebt den Hörer des Endgerätes Tln**101 ab. In der Kommunikationsanlage wird durch diesen Vorgang die MULAP-Leitung 101 belegt. Gleichzeitig wird durch den zuvor gestarteten Überwachungsvorgang M die Zustandsänderung am Teilnehmeranschluß des Endgerätes Tln**101 registriert. Die Kommunikationsanlage PABX überprüft nun anhand der gespeicherten Konfigurationsdaten, ob das diesem Teilnehmeranschluß zugeordnete Endgerät Tln**101 ein Master-Endgerät einer MULAP-Leitung ist. Da dies der Fall ist, sendet die Kommunikationsanlage PABX zur CTI-Applikation eine Meldung, die die Zustandsänderung beschreibt und als betroffene Endgeräte-Rufnummer die MULAP-Nummer 101 enthält.

Der Fall, dass die MULAP-Leitung MLP1 von dem Endgerät Tln**102 belegt wird, welches nicht das Master-Endgerät dieser MULAP-Leitung MLP1 ist, ist in Fig. 5 skizziert. Am Endgerät Tln**102 wird die MULAP-Leitung MLP1 durch Drücken der dieser zugeordneten Taste belegt. Die Kommunikationsanlage stellt anhand der gespeicherten Konfigurationsdaten fest, dass die MULAP-Leitung MLP1 das vom benutzten Endgerät Tln**102 verschiedene Master-Endgerät Tln**101 zugeordnet ist und überprüft weiter, ob für den Teilnehmeranschluss dieses Master-Endgeräts Tln**101 ein Überwachungsvorgang M aktiviert ist. Da dies der Fall ist, versendet die Kommunikationsanlage PABX auch in diesem Fall zur CTI-Applikation eine Meldung, die die Zustandsänderung "Leitungsbelegung" beschreibt und als betroffene Endgeräte-Rufnummer die MULAP-Nummer 101 enthält.

## Patentansprüche

1. Verfahren zur Steuerung und/oder Überwachung zumindest einer MULAP-Leitung einer Kommunikationsanlage durch eine Anwendung,
wobei jeder MULAP-Leitung eine MULAP-Rufnummer zugeordnet ist und mehrere Endgeräte auf die MULAP-Leitungen zugreifen können,
**dadurch gekennzeichnet,**
**dass** jeder der MULAP-Leitungen jeweils ein Endgerät als Master-Endgerät zugeordnetwird,
mit den Verfahrensschritten:
die Anwendung versendet einen Auftrag für eine MULAP-Rufnummer an die Kommunikationsanlage,
die Kommunikationsanlage setzt die MULAP-Rufnummer in die Endgeräte-Rufnummer des dieser MULAP-Leitung zugeordneten Master-Endgeräts um
und führt den Auftrag für diese Endgeräte-Rufnummer aus, wobei alle die MULAP-Leitung betreffenden Meldungen als die des Master-Endgeräts von der Kommunikationsanlage zur Anwendung als Meldungen dieser MULAP-Rufnummer gesendet werden.

2. Verfahren nach Anspruch 1,
**dadurch gekennzeichnet, dass**
jeder der MULAP-Leitungen jeweils ein anderes Endgerät als Master-Endgerät zugeordnet ist

3. Verfahren nach Anspruch 1 oder 2,
**dadurch gekennzeichnet, dass**
beim Zugriff auf eine MULAP-Leitung an einem anderen als dem Master-Endgerät dieser MULAP-Leitung eine Meldung erzeugt wird, die das Master-Endgerät dieser MULAP-Leitung betrifft.

4. Anordnung zur Steuerung und/oder Überwachung zumindest einer MULAP-Leitung einer Kommunikationsanlage durch eine Anwendung,
wobei jeder MULAP-Leitung eine MULAP-Rufnummer zugeordnet ist und mehrere Endgeräte auf die MULAP-Leitungen zugreifen können,
**dadurch gekennzeichnet,**
**dass** jeder der MULAP-Leitungen jeweils ein Endgerät als Master-Endgerät zugeordnet ist,
**dass** die Anwendung dazu geeignet ist, einen Auftrag für eine MULAP-Rufnummer an die Kommunikationsanlage zu versenden,
**dass** eine Umsetzeinheit vorgesehen ist, um die MULAP-Rufnummer in die Endgeräte-Rufnummer des dieser MULAP-Leitung zugeordneten Master-Endgeräts umzusetzen, und
**dass** die Kommunikationsanlage dazu geeignet ist, den Auftrag für diese Endgeräte-Rufnummer auszuführen,
wobei alle die MULAP-Leitung betreffenden Meldungen als die des Master-Endgeräts von der Kommunikationsanlage zur Anwendung als Meldungen dieser MULAP-Rufnummer gesendet werden.

## Claims

1. Method for controlling and/or monitoring at least one MULAP line of a communications system by means of an application,
wherein each MULAP line has a MULAP call number associated therewith and a plurality of terminals can access the MULAP lines,
**characterized in that** each of the MULAP lines have associated therewith in each case a terminal as a master terminal,
with the method steps;
the application sends an order for a MULAP call number to the communications system,
the communications system converts the MULAP call number into the terminal call number of the master terminal associated with said MULAP line
and executes the order for this terminal call number, wherein all the messages relating to the MULAP line are sent as messages of the master terminal from the communications system to the application as messages of said MULAP call number.

2. Method according to Claim 1, **characterized in that** each of the MULAP lines have associated therewith in each case another terminal as master terminal.

3. Method according to Claim 1 or 2, **characterized in that** when a MULAP line is accessed by a terminal other than the master terminal of said MULAP line, a message is generated relating to the master terminal of said MULAP.

4. Arrangement for controlling and/or monitoring at least one MULAP line of a communications system by means of an application,
wherein each MULAP line has associated therewith a MULAP call number and a plurality of terminals can access the MULAP lines,
**characterized in that** each of the MULAP lines has associated therewith in each case a terminal as master terminal,
**in that** the application is suitable for sending an order for a MULAP call number to the communications system,
**in that** a converting unit is provided in order to convert the MULAP call number into the terminal call number of the master terminal associated with said MULAP line and
**in that** the communications system is suitable for executing the order for said terminal call number, wherein all messages relating to the MULAP line are sent as messages of the master terminal from the communications system to the application as messages of said MULAP call number.

## Revendications

1. Procédé pour la commande et/ou la surveillance d'au moins une ligne MULAP d'un système de communication par une application,
un numéro d'appel MULAP étant attribué à chaque ligne MULAP et plusieurs appareils terminaux pouvant accéder aux lignes MULAP,
**caractérisé en ce que,**
un appareil terminal est attribué respectivement à chacune des lignes MULAP en tant qu'appareil terminal maître,
avec les étapes de procédé :
l'application envoie au système de communication un ordre pour un numéro d'appel MULAP,
le système de communication convertit le numéro d'appel MULAP en le numéro d'appel d'appareil terminal de l'appareil terminal maître attribué à cette ligne MULAP
et exécute l'ordre pour ce numéro d'appel d'appareil terminal, tous les messages concernant la ligne MULAP étant envoyés en tant que ceux de l'appareil terminal maître par le système de communication à des fins d'application en tant que messages de ce numéro d'appel MULAP.

2. Procédé selon la revendication 1,
**caractérisé en ce que**
un autre appareil terminal est attribué respectivement à chacune des lignes MULAP en tant qu'appareil terminal maître.

3. Procédé selon la revendication 1 oder 2,
**caractérisé en ce que,**
lors de l'accès à une ligne MULAP, dans un autre appareil que l'appareil terminal maître de cette ligne MULAP, il est généré un message qui concerne l'appareil terminal maître de cette ligne MULAP.

4. Dispositif de commande et/ou de surveillance d'au moins une ligne MULAP d'un système de communication par une application,
un numéro d'appel MULAP étant attribué à chaque ligne MULAP et plusieurs appareils terminaux pouvant accéder aux lignes MULAP,
**caractérisé**
**en ce qu'**un appareil terminal est attribué respectivement à chacune des lignes MULAP en tant qu'appareil terminal maître,
**en ce que** l'application est appropriée pour envoyer au système de communication un ordre pour un numéro d'appel MULAP,
**en ce qu'**il est prévu une unité de conversion pour convertir le numéro d'appel MULAP en le numéro d'appel d'appareil terminal de l'appareil terminal maître attribué à cette ligne MULAP, et
**en ce que** le système de communication est approprié pour exécuter l'ordre pour ce numéro d'appel d'appareil terminal,
tous les messages concernant la ligne MULAP étant envoyés en tant que ceux de l'appareil terminal maître par le système de communication à des fins d'application en tant que messages de ce numéro d'appel MULAP.
